# EUROPÄISCHE PATENTSCHRIFT

(11) **EP 1 936 400 B1**
(45) Veröffentlichungstag und Bekanntmachung des Hinweises auf die Patenterteilung: **23.02.2011**
(21) Anmeldenummer: 07123108.8
(22) Anmeldetag: 13.12.2007
(51) Int. Cl.: G01S 7/484, G01S 7/489, G01S 7/497, G01S 17/10, G01S 17/42

(54) **Laserscanner**
Laser scanner
Lecteur laser

(30) Priorität: 20.12.2006 DE 102006060108
(43) Veröffentlichungstag der Anmeldung: 25.06.2008
(73) Patentinhaber: SICK AG, 79183 Waldkirch (DE)
(72) Erfinder: Pastor, Sebastian, 79104 Freiburg (DE); Pierenkemper, Hans-Werner, 79312 Emmendingen (DE); Mack, Stefan Dr., 79104 Freiburg (DE)
(74) Vertreter: Ludewigt, Christoph

(56) Entgegenhaltungen:
- EP-A- 1 160 585
- EP-A- 1 321 777
- WO-A-89/07771
- WO-A-2006/077588
- DE-A1- 4 312 186
- DE-A1- 10 326 085
- JP-A- 11 352 226
- US-A- 4 521 107

## Beschreibung

Die Erfindung betrifft einen Laserscanner nach dem Oberbegriff des Anspruchs 1.

Ein derartiger Laserscanner oder eine Laserradarvorrichtung ist aus der DE 43 40 756 A1 bekannt. In dieser Laserradarvorrichtung ist ein Impulslaser vorhanden, der gesteuert aufeinanderfolgende Lichtimpulse in einen Messbereich aussendet. Mit einer Lichtempfangsanordnung werden die an einem Objekt im Messbereich zurückgeworfenen Lichtimpulse aufgenommen und in Form von elektrischen Signalen einer Auswerteeinheit zugeführt. In dieser Auswerteeinheit wird unter Berücksichtigung der Lichtgeschwindigkeit aus der Zeit zwischen Aussendung und Empfang des Lichtimpulses ein für den Abstand des Objektes zur Laserradarvorrichtung repräsentatives Abstandssignal ermittelt. Zwischen dem Impulslaser und dem Messbereich ist eine Lichtablenkeinheit angeordnet, mittels derer die Lichtimpulse fortlaufend in veränderte Richtungen durch den Messbereich gelenkt werden, so dass der gesamte Messbereich durchleuchtet wird. Laserradarvorrichtungen dieser Art werden in vielfältiger Weise verwendet. Insbesondere werden damit Objekte innerhalb eines Gefahrenbereiches detektiert. Aufgrund der Abstandsermittlungsfähigkeit sind derartige Laserradarvorrichtungen in der Lage, nicht nur die Anwesenheit eines Objektes detektieren zu können, sondern es kann aus der gewonnenen Abstandsinformation verbunden mit der Messung des Drehwinkels der Lichtablenkeinheit, die genaue Position des Objektes ermittelt werden.

Der Begriff "Licht" ist dabei nicht auf das sichtbare Licht beschränkt. Unter "Licht" sind allgemein elektromagnetische Strahlen, also UV-Licht, IR-Licht sowie sichtbares Licht zu verstehen, welche üblicherweise für den Betrieb von optoelektronischen Sensoren eingesetzt werden können.

Nachteilig am bekannten Stand der Technik ist, wenn derartige Laserradarvorrichtungen einen großen Messbereich überwachen müssen und innerhalb dieses Messbereichs Objekte erkannt werden sollen, die ein stark unterschiedliches Remissionsverhalten aufweisen. Die Laserradarvorrichtungen nach dem Stand der Technik weisen deshalb in der Regel permanent eine sehr hohe Signaldynamik im Bereich der Lichtempfangsanordnung inklusive der nachfolgenden Signalverarbeitung auf. Eine solch hohe Signaldynamik ist nicht nur mit erheblichen Herstellkosten verbunden, sondern kann zu Funktionsstörungen dieser Laserradarvorrichtung führen. Ursachen für derartige Funktionsstörungen können beispielsweise externe Störlichtquellen sein, die sich in unmittelbarer Nähe des Messbereichs befinden, so dass ihr Licht zur Lichtempfangsanordnung der Laserradarvorrichtung gelangen kann. Dadurch wird die Lichtempfangsanordnung, die hinsichtlich ihrer Detektionsempfindlichkeit auf das niedrigste zu erwartende Signal von dunklen Objekten im Messbereich ausgelegt sein muss, deutlich gestört, weil die Störlichtquellen ein erhebliches Rauschen erzeugen, das dem eigentlichen Messsignal überlagert ist. Der gleiche Effekt tritt auch dann auf, wenn der von der Laserradarvorrichtung ausgesandte Lichtimpuls auf ein Objekt fällt, das eine sehr hohe Remission aufweist und sich gleichzeitig noch in unmittelbarer Nähe zur Laserradarvorrichtung befindet. Durch diese hohen Empfangssignale entstehen Sättigungseffekte bzw. Rauscheinflüsse, welche die Genauigkeit der Abstandsmessung deutlich verschlechtern. Die aus dem Stand der Technik bekannten Lösungsansätze zur Vermeidung dieser Probleme bei optoelektronischen Sensoren basieren oft darauf, dass zur Unterdrückung dieser Störeinflüsse Mehrfachmessungen durchgeführt werden, um beispielsweise über Mittelwertbildungen den Messfehler zu verkleinern. Auch ist bekannt, fehlerbehaftete Messungen mit veränderter Detektionsempfindlichkeit der Lichtempfangsanordnung zu wiederholen. Derartige Verfahren sind jedoch bei richtungsveränderlichen Laserradarvorrichtungen nicht anwendbar, weil sich die Strahlrichtung bei zwei oder mehr aufeinanderfolgenden Lichtimpulsen derart verändert hat, dass jeweils unterschiedliche Objekte bzw. Objektabschnitte getroffen werden, die nicht miteinander in Beziehung gebracht werden können. Diese Auswirkung könnte zwar reduziert werden indem die Veränderung der Lichtablenkrichtung entsprechend reduziert würde, was jedoch deshalb nicht möglich ist, weil damit im gleichen Maße die Ansprechgeschwindigkeit der Laserradarvorrichtung zurückgehen würde.

Die WO 2006/077588 zeigt eine Vorrichtung zum Aussenden von zwei getrennten Laserstrahlen in eine Umgebung. Zum Aussenden der Laserstrahlen sind zwei unterschiedliche Dioden vorgesehen. Eine erste Signal-Diode generiert einen Laserstrahl mit einer niedrigen Energie und eine zweite Signal-Diode generiert einen Laserstrahl mit einer hohen Energie. Der erste Laserstrahl wird zeitlich vor dem zweiten Laserstrahl ausgesendet. Der zweite Laserstrahl wird jedoch nicht ausgesendet wenn ein Remissionssignal des ersten Laserstrahls über einem bestimmten Wert liegt, um eine Überbeanspruchung des Empfängers zu vermeiden. Zur Anpassung einer Reichweite kann die Leistung des Laserstrahls mit hoher Energie erhöht oder verringert werden.

Die EP 1 321 777 A1 offenbart ein Verfahren und eine Vorrichtung zur Aufnahme eines Objektraumes. Dabei sollen Referenzmarken im Objektraum mit hoher Sicherheit erfasst werden. Hierzu ist es vorgesehen zur Vermeidung von Übersteuerungen des Empfangskanals ein optisches Dämpfungsglied in den Strahlengang des Senders oder des Empfängers zur kontinuierlichen Veränderung der Signale einzubringen.

Die DE 43 12 186 A1 betrifft ein Verfahren zum Betrieb eines Triangulationslichttasters. Darin ist es vorgesehen eine Sendeleistung des Triangulationstasters aufgrund von unterschiedlichen Reflexionswerten einzustellen.

Die EP 1 160 585 A1 betrifft eine Abstandsmesseinrichtung und eine Verfahren zur Abstandsbestimmung. Dabei wird ein ausgesandtes Lichtsignal zweimal empfangen, einmal nach Reflexion an einem Objekt und einmal ohne Reflexion an dem Objekt, so dass zur Bestimmung der Lichtlaufzeit zwei Empfangssignale vorliegen, deren Phasenverschiebung ermittelt wird. Zur Unterdrückung von Störeinflüssen erfolgt eine Mehrfachauswertung aufeinanderfolgende Abtastvorgänge.

Die nachveröffentlichte EP 1 865 336 A1 betrifft eine Laserradarvorrichtung nach dem Lichtlaufzeitprinzip mit einem Impulslaser, der gesteuert aufeinanderfolgende Lichtimpulse über eine Lichtablenkeinheit in einen Messbereich aussendet. In der Lichtablenkeinheit ist ein optisches Strahlteilelement eingebaut, um die vom Impulslaser ausgesandten Lichtimpulse energetisch in einen Hauptstrahl und einen Vortaststrahl zu trennen.

Der Erfindung liegt die Aufgabe zugrunde, einen verbesserten Laserscanner nach dem Lichtlaufzeitprinzip bereitzustellen.

Die Aufgabe wird erfindungsgemäß durch einen Laserscanner nach dem Lichtlaufzeitprinzip mit einem Impulslaser, der gesteuert aufeinanderfolgende Lichtimpulse in einen Messbereich aussendet, gelöst. Der Laserscanner weist eine Lichtempfangsanordnung auf, welche die an einem Objekt im Messbereich zurückgeworfenen Lichtimpulse aufnimmt und in Form von elektrischen Empfangssignalen einer Auswerteeinheit zuführt, die unter Berücksichtigung der Lichtgeschwindigkeit aus der Zeit zwischen Aussendung und Empfang des Lichtimpulses ein für den Abstand des Objektes zum Laserscanner repräsentatives Abstandssignal ermittelt. Weiter ist eine zwischen dem Impulslaser und dem Messbereich angeordnete Lichtablenkeinheit vorhanden, welche die Lichtimpulse in sich fortlaufend verändernden Richtungen in den Messbereich umlenkt. Eine Lichtquelle ist vorhanden, die ein Lichtmesssignal mit reduzierter Leistung aussendet, das ebenfalls durch die Lichtablenkeinheit in sich fortlaufend verändernder Richtung in den Messbereich umgelenkt wird. Die Lichtquelle kann zusätzlich zu dem Impulslaser separat vorgesehen sein, oder die Lichtquelle kann auch durch den Impulslaser selbst gebildet werden. Die Lichtempfangsanordnung ist ausgebildet, das an dem Objekt im Messbereich zurückgeworfene Lichtmesssignal aufzunehmen und ein für die Remission des Lichtmesssignals an dem Objekt repräsentatives Remissionssignal zu ermitteln, und der Lichtimpuls oder die Empfangssignale sind abhängig von dem Remissionssignal veränderbar. Die Lichtempfangsanordnung ist als Regler ausgebildet, wobei die Lichtmesssignale einen Istwert bilden, welche mit einem vorgegebenen Sollwert verglichen werden und als Stellgröße der Lichtimpuls oder die Empfangssignale veränderbar sind.

Durch die Verwendung des Reglers können der Lichtimpuls oder die Empfangssignale schnell und automatisch angepasst werden. Durch verschiedene Reglereigenschaften kann der Regler an bestimmte Umgebungen, je nach zu erwartender Remission, angepasst werden.

Dadurch ist es möglich, abhängig von den Reflexionseigenschaften der Umgebung und der zu detektierenden Objekte, den auszusendenden Lichtimpuls zu verändern. Wird beispielsweise bei einer hohen Remission viel Licht des Lichtmesssignals empfangen, kann die Leistung des ausgehenden Lichtimpulses entsprechend verringert werden. Dadurch kann das empfangene Signal des Lichtimpulses immer optimal auf einen jeweiligen Arbeitsbereich der Lichtempfangsanordnung eingestellt werden. Es kommt dabei insbesondere nicht zu einer Übersteuerung der Lichtempfangsanordnung, womit auch eine Verbesserung der Detektionsgenauigkeit und der Zuverlässigkeit einhergeht.

Weitere Vorteile dieser Erfindung sind darin zu sehen, dass in Abhängigkeit von der Lichtstärke auf der Lichtempfangsanordnung des Lichtmesssignals eine Detektionsempfindlichkeit für den Empfang des Lichtsignals eingestellt werden kann. Durch diese mit Hilfe des Lichtmesssignals ermittelte Remissionsmessung wird die aktuelle Detektionsempfindlichkeit der Lichtempfangsanordnung so eingestellt, dass die vom Lichtsignal an dem Objekt remittierte Lichtmenge auf der Lichtempfangsanordnung im optimalen Arbeitsbereich der Lichtempfangsanordnung liegt. Es ist somit ein zusätzliches Messsystem vorhanden. Dadurch ist es möglich, eine Remissionsvorhersage für den Lichtimpuls zu generieren, ohne die Ansprechgeschwindigkeit des Laserscanners zu reduzieren.

Vorteilhafterweise ist eine elektronische Signalverarbeitungsstufe der Lichtempfangsanordnung nachgeordnet, um eine Detektionsempfindlichkeit der Lichtempfangsanordnung für den zu empfangenden Lichtimpuls in Abhängigkeit von dem Remissionssignal des Lichtmesssignals einzustellen. Die Einstellung der Detektionsempfindlichkeit für den Lichtimpuls wird in einer bevorzugten Ausführungsform dadurch ausgeführt, dass eine Schaltschwelle und/oder ein Verstärkungsfaktor in der elektrischen Auswerteeinheit der Lichtempfangsanordnung, mit welcher der Lichtimpuls empfangen wird, verändert wird. Mit dieser an die zu erwartenden Remissionswerte angepassten Detektionsempfindlichkeit ist der Laserscanner in vielen Betriebszuständen wesentlich unempfindlicher gegen Störeinwirkungen, die zum Beispiel durch Fremdlichtquellen hervorgerufen werden können.

Die Lichtempfangsanordnung ist ausgebildet, eine Verstärkung einer Avalanche Photodiode für den zu empfangenden Lichtimpuls in Abhängigkeit von dem Remissionssignal einzustellen. Nach dieser weiteren vorteilhaften Ausführungsform der Erfindung ist es vorgesehen, die Avalanche Photodiodenspannung in der Lichtempfangsanordnung in Abhängigkeit von der gemessenen Lichtmesssignal einzustellen. Mit dieser Maßnahme wird neben der geringeren Fremdlichtabhängigkeit der Laserscanners auch eine bessere Temperaturkompensation bei der Avalanche Photodiode erreicht. Weiter wird mit dieser Maßnahme bei sehr hohen Remissionen die Messgenauigkeit verbessert, da die nachgeordnete elektronische Auswerteeinheit weniger stark übersteuert wird.

Eine reduzierte Leistung des Lichtmesssignals ist vorteilhaft wesentlich kleiner, insbesondere ca. 1 % der Leistung des Lichtimpulses. Die zu detektierenden Objekte können unterschiedliche Remissionen aufweisen. Sehr helle oder gar spiegelnde Oberflächen haben eine sehr hohe Remission, sehr dunkle Objekte haben eine geringere Remission, die minimal ca. 1,8 % betragen darf nach entsprechenden Richtlinien. Bei der Erfassung des Objektes mit dem Lichtimpuls darf keine Übersteuerung der Elektronik erfolgen, da ansonsten falsche Messwerte erzeugt werden. Insbesondere für diesen Fall ist es vorteilhaft, wenn das Lichtmesssignal eine derart kleine Leistung aufweist. Als Vorteil ergibt sich dabei, dass es auch bei der Messung der Remission des Objektes mit dem Lichtmesssignal nicht zu einer Übersteuerung kommt und somit sichere Rückschlüsse auf die Remissionseigenschaften des Objektes möglich sind.

Die Lichtquelle ist nach einer weiteren Ausführungsform durch den Impulslaser selbst gebildet. Somit ist keine zusätzliche Lichtquelle notwendig, sondern der Impulslaser kann die Funktionen der Lichtquelle mit übernehmen. Die Lichtquelle hat damit die gleichen optischen Eigenschaften wie der Impulslaser. Dadurch wird das zu detektierende beleuchtete Objekt sowohl bei der Messung der Remissionseigenschaften des Objektes mit dem Lichtmesssignal als auch bei der tatsächlichen Erfassung des Objektes mit dem Lichtimpuls mit einem gleichen optischen Spektrum beleuchtet. Durch die Verwendung des Impulslasers für die Remissionsmessung und die Objektdetektierung entfallen auch zusätzliche elektronische Einheiten für die Ansteuerung zusätzlicher Lichtquellen. Auch werden systematische Fehler bei der Verwendung nur eines Impulslasers verringert. Zusätzlich muss nur der Impulslaser genau justiert werden. Die Justage einer zusätzlichen Lichtquelle entfällt.

In einer weiteren erfinderischen Ausgestaltung des Laserscanners sind in einer elektronischen Ansteuereinheit für den Impulslaser Mittel vorhanden, um die Ausgangsleistung der Lichtimpulse in Abhängigkeit von der mit dem Lichtmesssignal gemessenen Signalhöhe einzustellen. Mit einer Leistungsanpassung des Impulslasers an die vorherrschenden Einsatzbedingungen wird der Impulslaser in vorteilhafter Weise in einem Betriebsmodus betrieben, der den Impulslaser nicht mehr als notwendig belastet. Auf diese Weise wird die Lebensdauer des Impulslasers wesentlich verbessert.

In einer weiteren Ausführungsform der Erfindung ist das Lichtmesssignal ein kontinuierliches Gleichlichtsignal, welches dem Lichtimpuls überlagert ist. Ein verwendeter Impulslaser kann prinzipiell auch mit Gleichstrom angesteuert werden. Wird dieser Gleichstrom klein genug gewählt, sendet der Impulslaser Gleichlicht mit geringer Intensität aus. Durch die Verwendung des Gleichlichtsignals kann zu beliebigen Zeitpunkten festgestellt werden, wie hoch die Remissionen in einer Umgebung sind. Dadurch kann zu beliebigen Zeitpunkten die Lichtstärke des Impulslasers an das zu detektierende Objekt angepasst werden.

In Weiterbildung der Erfindung weist die Lichtempfangsanordnung Mittel auf zur Trennung des empfangenen Lichtmesssignals von den empfangenen Lichtimpulsen. Dadurch kann das Lichtmesssignal getrennt von den empfangenen Lichtimpulsen ausgewertet werden. Dies hat den Vorteil, dass bei der Auswertung des Lichtmesssignals keine anderen Komponenten wie z. B. Störlicht enthalten sind. Eine Empfindlichkeit einer Auswerteeinheit für das Lichtmesssignal kann somit genau an den Wertebereich des Messsignals angepasst werden. Das Mittel zur Trennung kann auch in der Auswerteeinheit selbst enthalten sein. In diesem Fall werden die elektronischen Signale des Lichtmesssignals und des empfangenen Lichtimpulses in der Auswerteeinheit getrennt und weiter ausgewertet.

Bei Verwendung von Gleichlicht als Lichtmesssignal kann das Mittel zur Trennung vorteilhaft eine Frequenzweiche sein, mit der die elektronischen Signale des Gleichlichts von den Signalen der Lichtimpulse, die mit einer Pulsfrequenz empfangen werden, getrennt werden. Dadurch ist es möglich das empfangene Gleichlichtmesssignal jederzeit auszuwerten, so dass zu beliebigen Zeitpunkten festgestellt werden kann, wie hoch die Remissionseigenschaft eines Objektes ist.

Zusätzlich kann das Gleichlicht mit einer geringen Modulationstiefe moduliert werden und den Lichtimpulsen überlagert sein. Die Lichtempfangsanordnung des Laserscanners wird so ausgelegt, dass diese zusätzlich zum eigentlichen Lichtimpuls auch das modulierte Gleichlichtsignal aufnimmt. Durch die Modulation kann sichergestellt werden, dass das reflektierte Gleichlicht kein Fremdlicht ist, sondern tatsächlich vom Laserscanner selbst erzeugt wurde.

In Weiterbildung der Erfindung ist das Lichtmesssignal ein Lichtimpulsmesssignal. Dadurch kann das zu detektierende Objekt zu einem bestimmten Zeitpunkt mit dem Lichtimpulsmesssignal beaufschlagt werden, um die Remission an genau dieser einen festen Position zu detektieren. Das Lichtimpulsmesssignal wird dabei mit einem kleinen Öffnungswinkel auf das zu detektierende Objekt ausgesendet. Störende Remissionen von benachbarten Objekten werden damit wirkungsvoll unterdrückt. Dadurch ist es möglich, die Remissionen von Objekten sehr genau bestimmen zu können.

In einer weiteren Ausführungsform folgt auf das Lichtimpulsmesssignal der Lichtimpuls mit einem zeitlichen Abstand kleiner 1µs. Üblicherweise werden im Laserscanner Lichtimpulse über einen kontinuierlich umlaufenden Drehspiegel in einen Umgebungsbereich gesendet. Wird das Lichtimpulssignal nun circa 1 µs vor dem Lichtimpuls ausgesendet, so liegt das Lichtimpulssignal räumlich dicht, d. h. nur in sehr kleinem Winkelabstand bei dem Lichtimpuls, so dass die gemessene Remission im Wesentlichen an der Stelle gemessen wird, an der Lichtimpulse an dem Objekt reflektiert werden.

Das Lichtmesssignal kann in Weiterbildung der Erfindung auch optisch vom Hauptstrahl getrennt werden, zum Beispiel durch ein Gitter auf dem Ablenkspiegel. Eine besonders elegante Möglichkeit den Messstrahl vom Hauptstrahl abzuspalten ist gegeben, wenn sich auf dem Ablenkspiegel nur in dessen Mitte, wo der Sendestrahl den Spiegel trifft, ein optisches Gitter befindet. Dieses Gitter reflektiert ca. 99 % in die nullte Ordnung (d. h. 99 % des Sendestrahls bleibt unbeeinflusst) und 1 % in die +1. Ordnung. Wenn die Richtung der +1. Ordnung genau die Richtung ist, in die der nächste Schuss ausgesendet wird, stellt der Strahl der +1. Ordnung den Messstrahl dar, der dem Hauptstrahl somit um ein Winkelinkrement vorauseilt.

Weiter kann mit dem Lichtimpulsmesssignal ein für den Abstand des Objektes zum Laserscanner repräsentatives Abstandssignal ermittelt werden. Der Vorteil dieser Ausbildung liegt darin, dass die Entfernungsinformation redundant vorliegt und die zusätzliche Entfernungsinformation zur Erhöhung einer Sicherheitsstufe ausgewertet oder zu Prüfung einer Plausibilität herangezogen werden kann. Ein weiterer Vorteil in der redundanten Ermittlung des Abstandssignals liegt darin, dass zusätzlich zu der ermittelten Remission auch eine Abstandsinformation vorliegt, in der diese Remission aufgetreten ist. Dadurch können auch Rückschlüsse auf eine absolute Remissionseigenschaft des Objektes gezogen werden. So kann bei einer Verfolgung von bewegten Objekten im Messbereich deren Remission abhängig vom Abstand genau bestimmt werden. Eine Identifizierung bewegter Objekte wird durch die abstandsabhängige Remissionsmessung auch verbessert. Beispielsweise wird ein Objekt mit einer hohen Remissionen in einem entfernten Bereich eine vergleichsweise geringere Lichtmenge remittieren wie das gleiche Objekt im Nahbereich. Dadurch ist es sogar möglich, ein Objekt aufgrund seiner Remissionseigenschaften unabhängig vom Abstand zu klassifizieren. Zur Erkennung eines Objektes sind somit zwei unterschiedliche Signifikationsmerkmale vorhanden, nämlich zum einen der Abstand des Objektes und zum anderen die Remissionseigenschaft des Objektes.

In Weiterbildung der Erfindung sind mehrere aufeinanderfolgende Lichtmesssignale aus einer einzigen umlaufenden Abtastbewegung der Lichtablenkeinheit durch die Lichtempfangsanordnung auswertbar. Dadurch kann ein Mittelwert und/oder eine Extrapolation zur Feststellung der Remissionseigenschaften des Objektes gebildet werden. Insbesondere wenn die Oberfläche kontrastreich ist mit Kontrastelementen, deren Größe eines auftreffenden Lichtflecks des Lichtimpuls entspricht, ist eine Mittelwertbildung von Vorteil, um den auszusendenden Lichtimpuls bestmöglich an die kontrastreiche Oberfläche anzupassen.

Entsprechend ist es vorgesehen, mehrere Lichtmesssignale aus unterschiedlichen umlaufenden Abtastbewegungen der Lichtablenkeinheit, die jedoch mit gleicher Richtung zueinander aus dem Messbereich empfangen werden, durch die Lichtempfangsanordnung auszuwerten. Hierdurch ist es möglich, eine Mehrfachauswertung von Lichtmessimpulsen vorzunehmen, die nahezu an der gleichen Stelle eines zu detektierenden Objektes reflektiert werden. Insbesondere wird durch die Mehrfachauswertung der Einfluss von Fehlmessungen deutlich reduziert.

Ausgehend von mehreren Lichtmesssignalen kann auch eine zweidimensionale, z. B. lineare Extrapolation durchgeführt werden, um die Remissionseigenschaften des Objektes zu ermitteln.

In Weiterbildung der Erfindung ist als Ansteuereinheit eine Ansteuerschaltung zum Ansteuern der Lichtquelle mit zwei Avalanche-Transistoren vorgesehen, wobei ein erster Transistor für eine Erzeugung des Lichtimpulses und ein zweiter Transistor für eine Erzeugung des Lichtmesssignals vorgesehen ist. Dadurch kann der Lichtimpuls und das Lichtmesssignal unabhängig voneinander erzeugt werden. Insbesondere ist es durch die unabhängigen Transistorsstufen möglich, den Lichtimpuls und das Lichtmesssignal mit dem sehr kurzen Zeitabstand kleiner 1µs zu erzeugen. Als Avalanche-Transistor bezeichnet man einen bipolaren Transistor, dessen Kollektor-Basis-Strecke im Durchbruchbereich betrieben wird. Es treten dann negative differentielle Widerstände des Schaltelementes auf. Dadurch ergeben sich beim Durchbruch sehr steile Schaltflanken, die Anstiegsgeschwindigkeiten von einigen hundert Volt pro Nanosekunde ermöglichen.

Dadurch ist es möglich, die sehr kurzen Laserpulse von wenigen Pikosekunden Dauer zu erzeugen.

Weiter weisen der erste und zweite Transistor im Ausgangskreis am jeweiligen Kollektor jeweils getrennte Hochspannungen als Versorgungsspannungen auf und beide Transistoren weisen im Ausgangskreis einen Widerstand und einen Ladekondensator auf zur Erzeugung einer jeweiligen Ausgangsleistung für die Lichtquelle bzw. den Impulslaser. Durch die getrennten Hochspannungen bzw. unterschiedliche Ladekondensatoren kann der Lichtimpuls und das Lichtmesssignal unabhängig voneinander mit unterschiedlicher Energie erzeugt werden. Mit der jeweiligen Hochspannung von ca. 100 bis 400 Volt wird über einen Ladewiderstand ein Ladekondensator aufgeladen. Bei Ansteuerung des jeweiligen Avalanche-Transistors über einen Steuerimpuls auf den Basisanschluss wird der Ladekondensator über einen Entladestrom durch die Lichtquelle bzw. den Impulslaser entladen.

In Weiterbildung der Erfindung ist an dem Kollektoranschluss des zweiten Transistors ein Widerstand und eine Induktivität in Reihe angeordnet zur Anpassung einer Schwingkreisfrequenz und einer Dämpfung. Der Entladevorgang des Ladekondensators über die Lichtquelle oder den Impulslaser entspricht üblicherweise einer halben Periode einer aperiodischen Schwingung in einem LC-Schwingkreis, bestehend aus der Induktivität und dem Ladekondensator. Um das Lichtmesssignal hinsichtlich Impulsdauer und Aperiodizität ggf. anzupassen wird die Induktivität und der Widerstand in Reihe geschaltet.

Im Folgenden wird die Erfindung an Hand von Ausführungsbeispielen unter Bezugnahme auf die Zeichnung im Einzelnen erläutert.

In der Zeichnung zeigt:
- Figur 1;: eine schematische Darstellung eines erfindungsgemäßen Laserscanners;
- Figur 2: eine logarithmische Darstellung von ausgesendeten Lichtimpulsen und eines Lichtmesssignals;
- Figur 3: eine logarithmische Darstellung der empfangenen Lichtimpulse und des Lichtmess Signals.

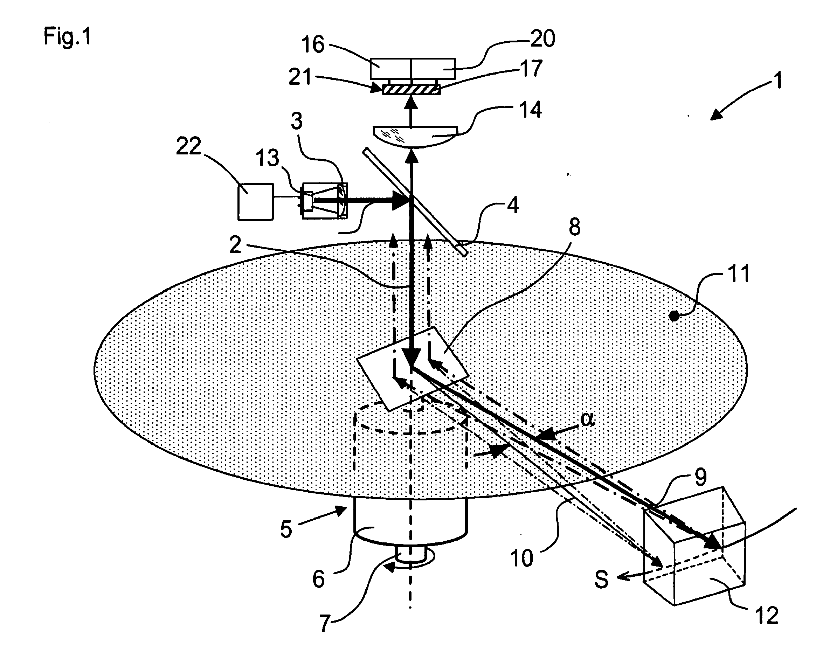

Die Erfindung wird im Folgenden beispielhaft unter Bezugnahme auf die Zeichnung näher beschrieben, deren Figur 1 eine schematische, perspektivische Ansicht eines Laserscanners 1 zur Aussendung eines Lichtimpulses 10 und eines Lichtmesssignals 9 zeigt.

Ein solcher Laserscanner ist grundsätzlich aus der DE 43 40 756 A1 bekannt, auf deren Inhalt hiermit vollumfänglich Bezug genommen wird. Dieser Laserscanner arbeitet nach dem Lichtlaufzeitprinzip, d. h. aufeinanderfolgende Lichtimpulse werden über einen Drehspiegel mit kontinuierlich verändertem Winkel in einen Messbereich ausgesendet. Nach dem Prinzip der Autokollimation empfangene Lichtimpulse werden unter Berücksichtigung der Lichtgeschwindigkeit, der Zeit zwischen Aussendung und Empfang der Lichtimpulse ausgewertet, so dass ein für einen Abstand eines Objektes zum Laserscanner repräsentatives Abstandsignal ermittelt wird. Zusammen mit der Kenntnis des Winkels des Drehspiegels kann die Position des Objektes im Raum ermittelt werden.

Von einem Impulslaser 13 werden aufeinanderfolgende Lichtimpulse 10 und Lichtmesssignale 9 ausgesandt. Zur Aussendung der Lichtimpulse 10 und Lichtmesssignale 9 können auch separate Lichtquellen eingesetzt werden. Beispielsweise können die separaten Lichtquellen auf einem gemeinsamen Chip untergebracht werden, damit diese hinreichend eng beieinander liegen. Der Impulslaser 13 als gemeinsame Lichtquelle hat den Vorteil, dass die Lichtimpulse 10 und die Lichtmesssignale 9 mit den gleichen optischen Eigenschaften, beispielsweise mit der gleichen optischen Wellenlänge ausgesendet werden. Weiter ist nur eine einzige Lichtquelle zur Aussendung der beiden Signale notwendig. Dem Impulslaser 13 ist ein Ansteuereinheit 22 vorgeordnet, um die Ausgangsleistung des Lichtimpulses 10 einzustellen.

Zur Beeinflussung einer Lichtstrahlcharakteristik ist dem Impulslaser 13 ein Sendeobjektiv 3 vorgeordnet. Nach dem Austritt der Lichtimpulse 10 und Lichtmesssignale 9 aus dem Sendeobjektiv 3 wird das Licht an einem Teilerspiegel 4 derart umgelenkt, dass es in einer Flucht zu einer Drehachse einer Lichtablenkeinheit 5 verläuft. Die Komponenten der Lichtablenkeinheit 5 sind ein Motor 6 mit einer Motorachse 7 sowie ein auf der Motorachse 7 unter einem Winkel von 45° angeordneter Drehspiegel 8. Durch eine Bewegung entlang einer Scanrichtung S kreieren das Lichtmesssignal 9 und der Lichtimpuls 10 somit eine Scanebene 11, in dessen Zentrum die Drehachse der Lichtablenkeinheit 5 steht.

Wenn das Lichtmesssignal 9 zeitlich vor dem Lichtimpuls 10 ausgesandt wird, wird das zu detektierende Objekt 12 zunächst vom Lichtmesssignal 9 erfasst. Beim Auftreffen des Lichtmesssignals 9 auf das Objekt 12 treten abhängig von der Oberflächenbeschaffenheit des Objekts 12 mehr oder weniger starke Remissionen des Lichts auf. Ein Teil des remittierten Lichts wird dabei in sich zurückreflektiert, trifft wieder auf den Drehspiegel 8 und trifft über einen halbdurchlässigen Teilerspiegel 4 und eine Empfangsoptik 14 auf die Lichtempfangsanordnung 17.

Mit der Drehung der Lichtablenkeinheit 5 um einen Winkel α trifft nach dem Lichtmesssignal 9 auch der Lichtimpuls 10 auf das Objekt 12 auf. Analog zur Remission des Lichtmesssignals 9 an der Oberfläche des Objektes 12 trifft zeitversetzt zum Lichtmesssignal 9 auch ein Anteil des am Objekt 12 remittierten Lichtes des Lichtimpulses 10 als leicht divergenter Streukegel auf den Drehspiegel 8 auf und damit wiederum über den halbdurchlässigen Teilerspiegel 4 und die Empfangsoptik 14 auf die Lichtempfangsanordnung 17.

Der Lichtempfangsanordnung 17 ist eine Signalverarbeitungsstufe 20 nachgeordnet. Die Lichtempfangsanordnung 17 kann auch Mittel aufweisen zur Trennung des empfangenen Lichtmesssignals 9 von den empfangenen Lichtimpulsen 10. Wenn beispielsweise das Lichtmesssignal 9 ein Gleichlichtsignal oder ein moduliertes Gleichlichtsignal mit einer Modulationsfrequenz ist und die Pulsfrequenz der empfangenen Lichtimpulse 10 sich von der Modulationsfrequenz unterscheidet, kann eine Trennung der Signale mit Hilfe einer Frequenzweiche in der Auswerteeinheit 16 durchgeführt werden. Handelt es sich bei dem Lichtmesssignal 9 um Lichtimpulsmesssignale, so können diese in der Auswerteeinheit 16 mittels unterschiedlicher Zeitfenster von den Lichtimpulsen 10 separiert werden. Der zeitliche Abstand zwischen dem Lichtimpulsmesssignal 9 und dem Lichtimpuls 10 ist dabei typischerweise kleiner einer Mikrosekunde. Dadurch liegt das Lichtimpulsmesssignal 9 zeitlich und damit auch räumlich nahe bei dem auf dem Objekt auftreffenden Lichtimpuls 10. Damit wird durch das Lichtimpulsmesssignal 9 die Remissionseigenschaft der Oberfläche des zu detektierenden Objektes 12 räumlich nahe zu dem Auftreffpunkt des Lichtimpulses 10 auf dem Objekt 12 detektiert.

Durch die Auswertung des Lichtmesssignals 9 durch die elektronische Signalverarbeitungsstufe 20 wird erfindungsgemäß festgestellt, welche Remissionseigenschaften das Objekt 12 aufweist. Ausgehend von den erfassten Remissionseigenschaften des Objektes 12 wird eine Signalstärke des nachfolgend ausgesandten Lichtimpulses 10 angepasst. Dadurch ist es möglich eine Detektionsempfindlichkeit der Lichtempfangsanordnung 17 abhängig von der erfassten Remissionseigenschaft des Objektes einzustellen.

Das Lichtmesssignal 9 wird dabei mit einer reduzierten Leistung gegenüber dem Lichtimpuls 10 ausgesendet. Ausgehend von der Empfindlichkeit des Lichtempfangselements 17 kann mit dem leistungsreduzierten Lichtmesssignal 9 sehr genau eine Remission der zu detektierenden Objekte 12 festgestellt werden. Die Signalstärke des empfangenen Lichtmesssignals 9 ist somit proportional zu der Remissionseigenschaft des zu detektierenden Objektes 12. Die reduzierte Leistung des Lichtmesssignals 9 beträgt dabei zirka 1 % der Leistung des Lichtimpulses 10.

Die Lichtempfangsanordnung 17 wird vorzugsweise durch eine Avalanche Fotodiode gebildet. Ausgehend von dem ausgewerteten Remissionswert des empfangenen Lichtmesssignals 9 kann eine Verstärkung der Fotodiode eingestellt werden oder auch eine Ausgangsleistung des Impulslasers 13 durch eine Ansteuereinheit 22 angepasst werden.

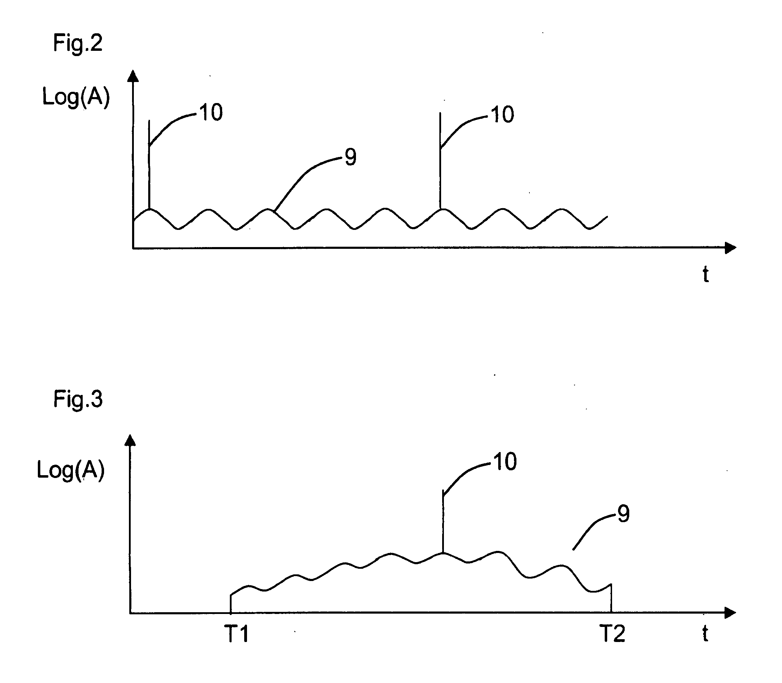

Figur 2 zeigt in einer sehr schematischen Darstellung logarithmisch aufgetragen die Amplituden A der ausgesendeten Lichtimpulse 10 und des Lichtmesssignals 9 über der Zeit t mit dem Laserscanner aus Figur 1. Bei dem Lichtmesssignal 9 handelt es sich bei diesem Ausführungsbeispiel um ein moduliertes Gleichlichtsignal. Ausgehend von der Ansteuereinheit 22 werden Lichtimpulse 10, wie bereits ausführlich in Bezug auf Figur 1 erläutert, in gleichmäßigen Zeitabständen ausgesendet. Die Lichtimpulse 10 überlagern dabei das Lichtmesssignal 9 und weisen eine wesentlich höhere Amplitude A auf, als das modulierte Gleichlichtsignal. Die ausgesendeten Lichtimpulse 10 und das modulierte Gleichlichtsignal treffen in diesem Beispiel auf ein nicht dargestelltes retroreflektierendes Objekt im Messbereich. Das retroreflektierende Objekt ist beispielsweise als Orientierungsmarke im Messbereich angeordnet.

Ausgehend von den ausgesendeten Signalen, dargestellt in Figur 2, zeigt Figur 3 schematisch die empfangenen Lichtimpulse 10 und das empfangene Lichtmesssignal 9 bei Reflexion an dem retroreflektierenden Objekt im Messbereich, ebenfalls in logarithmischem Maßstab. Das modulierte Gleichlichtsignal wird nur in dem zeitlichen Bereich zwischen den Zeitpunkten T1 und T2 detektiert, der der Zeit entspricht, die verstreicht, wenn der scannende Lichtstrahl den Reflektor überstreicht. Die Stärke des empfangenen Lichtmesssignals 9 beziehungsweise eine Modulationstiefe des empfangenen Lichtmesssignals 9 gibt Aufschluss über die Reflexionseigenschaft des Objektes. Ausgehend davon kann die Signalstärke des ausgesendeten Lichtimpulses 10 angepasst werden oder die Empfindlichkeit der Lichtempfangsanordnung eingestellt werden.

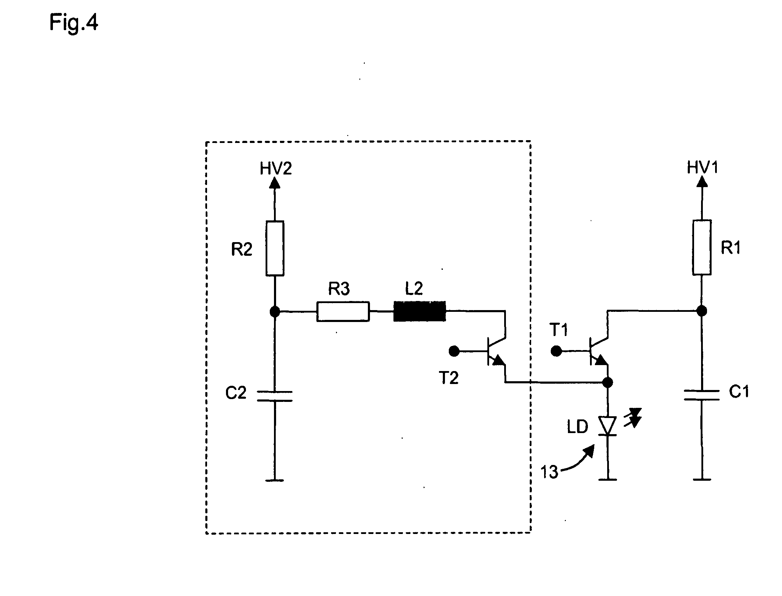

Figur 4 zeigt eine erfindungsgemäße Schaltung zur Erzeugung des Lichtmessimpulses und des Lichtimpulses. Eine wirkungsvolle Methode zur Erzeugung der Impulse ist eine Entladung eines Kondensators C1 oder C2 mittels des Avalanche-Effekts von bipolaren Transistoren T1 und T2. Der Avalanche-Effekt ist ein definiertes Durchbruchverhalten einer Kollektor-Emitter-Strecke eines verwendeten Transistors mit einer sehr geringen Anstiegszeit und einer hohen Stromanstiegsrate bei sehr hohen Spitzenströmen bis zu 100A. Da der Avalanche-Effekt nur bei hohen Spannungen nutzbar ist, je nach Transistortyp im Bereich von 100-400V, wird der zu entladene Kondensator C1, C2 mit einer Hochspannung HV1 bzw. HV2 aufgeladen. Selektierte Avalanche-Transistoren besitzen eine hohe Reproduzierbarkeit dieses Spannungsdurchbruchs. Konventionelle Transistoren eignen sich prinzipiell auch, aber auf Kosten ihrer Lebensdauer. Eine Pulsbreite und eine Anstiegszeit des Lichtimpulses oder Lichtmessimpulses ist im Wesentlichen nur von der Zeitkonstante des Entladekreises abhängig. Eine Ansteuerung der Basis der Transistoren T1 bzw. T2 sorgt für ein definiertes zeitliches Impulsverhalten. Die Ausgangsleistung der Impulse ist nahezu proportional zum Stromfluss durch eine Laserdiode LD, die den Impulslaser und die Lichtquelle bildet. Die erzielbare Impulsleistung hängt im Wesentlichen mit der Kapazität des Entladekondensators C1, C2 und der Hochspannung HV zusammen. Die elektrische Energie E beträgt dabei E=1/2 * C * HV², wobei C die Kapazität des Ladekondensators ist und HV die Hochspannung. Der Lichtimpuls oder Lichtmessimpuls ist nahezu unabhängig vom Triggerimpuls an der Basis der Transistoren T1 bzw. T2.

Erfindungsgemäß sind die zwei unabhängige Transistoren T1 und T2 vorgesehen, wobei Transistor T1 zur Erzeugung des Lichtimpulses und Transistor T2 zur Erzeugung des Lichtmessimpulses vorgesehen ist. Die Emitter der beiden Transistoren T1 und T2 sind jeweils miteinander und mit der Laserdiode LD zur Erzeugung der Lichtimpulse verbunden. Der zweite Anschluss der Laserdiode LD ist mit Masse verbunden. An dem Basisanschluss des Transistors T1 ist eine nicht dargestellte Ansteuerelektronik vorgesehen, um einen entsprechenden jeweiligen Zeitpunkt zur Aussendung des Lichtimpulses vorzugeben. An dem Kollektoranschluss des Transistors T1 ist der Ladekondensator C1 angeschlossen, dessen zweiter Anschluss mit Masse verbunden ist. Der Ladekondensator C1 wird über einen Widerstand R1 mit Hilfe einer Hochspannungsversorgung HV1 aufgeladen. Der aufgeladene Kondensator C1 dient dann als Energiequelle für die Laserdiode LD, sobald der Transistor T1 entsprechend angesteuert wird. Sobald ein Ansteuerimpuls an der Basis von Transistor T1 anliegt, kommt es zu einem Lawinendurchbruch der Kollektor-Emitter-Strecke des Transistors T1 und ein kurzer Lichtimpuls mit einer Dauer von wenigen Piko- bis Nanosekunden wird über die Laserdiode LD ausgeben.

Parallel zu dem Transistor T1 ist der Transistor T2 zur Erzeugung des Lichtmessimpulses vorgesehen. Hierzu ist eine zweite ggf. unabhängige Hochspannungsversorgung HV2 vorgesehen, mit Hilfe derer über einen Widerstand R2 ein entsprechender zweiter Ladekondensator C2 aufgeladen wird. Zwischen dem Ladenkondensator C2 und dem Kollektor des Transistors T2 ist noch ein zusätzlicher Widerstand R3 und eine Induktivität L2 angeordnet. Dieser Widerstand R3 und die in Reihe angeordnete zugehörige Induktivität L2 sind vorgesehen, um eine Zeitkonstante und/oder Dämpfung eines LC-Schwingkreises, bestehend aus der Induktivität L2 und dem Ladekondensator C2, einzustellen. Sobald an der Basis von Transistor T2 ein entsprechendes Steuersignal anliegt, erfolgt aufgrund der Hochspannung, die von dem zweiten Ladekondensator C2 abgegeben wird, ein Lawinendurchbruch der Kollektor-Emitter-Strecke und dadurch der Lichtmessimpuls an der Laserdiode LD.

Aufgrund der unabhängigen Schaltungsteile von Transistor T1 und Transistor T2 kann die Laserdiode LD unabhängig jedoch zeitlich versetzt zueinander angesteuert werden zur Erzeugung des Lichtmessimpulses und des Lichtimpulses.

Neben der elektronischen Schaltung ist der richtige mechanische Aufbau der Lasersteuerung und die Auswahl der elektronischen Bauelemente von Bedeutung. Jede Leiterbahn bildet eine Induktivität, die bei den schnellen Stromanstiegszeiten und hohen Stromamplituden starken Einfluss auf den zeitlichen Verlauf des Strom und somit auf den Lichtimpuls bzw. Lichtmessimpuls nimmt. Der Aufbau der Lasersteuerung in SMD-Technik und ein sorgfältig geplantes Platinenlayout ist zwingend erforderlich für qualitativ hochwertige Messergebnisse. Bei Strömen von einigen 10A nehmen zudem geringste Leitungswiderstände in der Größenordnung von einigen 10 milliohm, insbesondere bei der Massefläche, Einfluss auf das Impulsverhalten. Eine strikte HF-Abschirmung dieser Laserimpulssteuerung ist erforderlich, um in der Nähe befindliche Empfangssysteme nicht zu stören.

### Bezugszeichen:

- 1: Laserscanner
- 2: Lichtstrahl
- 3: Sendeobjektiv
- 4: Teilerspiegel
- 5: Lichtablenkeinheit
- 6: Motor
- 7: Motorachse
- 8: Drehspiegel
- 9: Lichtmesssignal
- 10: Lichtimpuls
- 11: Scanebene
- 12: Objekt
- 13: Impulslaser
- 14: Empfangsoptik
- 16: Auswerteeinheit
- 17: Lichtempfangsanordnung
- 20: Signalverarbeitungsstufe
- 21: Avalanche Photodiode
- 22: Ansteuereinheit

- S: Scanrichtung
- α: Winkel
- A: Amplitude
- T1, T2: Zeitpunkte

- HV1, HV2: Hochspannungsversorgung
- R1, R2, R3: Widerstände
- C1, C2: Ladekondensatoren
- L2: Induktivität
- T1, T2: Avalanche-Transistoren
- LD: Laserdiode

## Patentansprüche

1. Laserscanner nach dem Lichtlaufzeitprinzip mit einem Impulslaser (13), der aufeinanderfolgende Lichtimpulse (10) in einen Messbereich aussendet und mit
- einer Lichtempfangsanordnung (17), welche die an einem Objekt (12) im Messbereich zurückgeworfenen Lichtimpulse (10) aufnimmt und in Form von elektrischen Empfangssignalen einer Auswerteeinheit (16) zuführt,
- die unter Berücksichtigung der Lichtgeschwindigkeit aus der Zeit zwischen Aussendung und Empfang des Lichtimpulses (10) ein für den Abstand des Objektes zum Laserscanner (1) repräsentatives Abstandssignal ermittelt
- sowie einer zwischen dem Impulslaser (13) und dem Messbereich angeordneten Lichtablenkeinheit (5), welche die Lichtimpulse (10) in sich fortlaufend verändernden Richtungen in den Messbereich umlenkt,
wobei,
- eine Lichtquelle vorhanden ist, die ein Lichtmesssignal (9) mit reduzierter Leistung aussendet, das ebenfalls durch die Lichtablenkeinheit (5) in sich fortlaufend verändernder Richtung in den Messbereich umgelenkt wird,
- die Lichtempfangsanordnung (17) ausgebildet ist, das an dem Objekt im Messbereich zurückgeworfene Lichtmesssignal (9) aufzunehmen und ein für die Remission des Lichtmesssignals (9) an dem Objekt repräsentatives Remissionssignal zu ermitteln, und
- der Lichtimpuls (10) oder die Empfangssignale abhängig von dem Remissionssignal veränderbar sind
- **dadurch gekennzeichnet,**
- **dass** die Lichtempfangsanordnung (17) als Realer ausgebildet ist, wobei die Lichtmesssignale (9) einen Istwert bilden, welche mit einem vorgegebenen Sollwert verglichen werden und als Stellgröße der Lichtimpuls (10) oder die Empfangssignale veränderbar sind.

2. Laserscanner nach Anspruch 1, **dadurch gekennzeichnet, dass** eine elektronische Signalverarbeitungsstufe (20) vorhanden ist, die der Lichtempfangsanordnung (17) nachgeordnet ist, um eine Detektionsempfindlichkeit der Lichtempfangsanordnung (17) für den zu empfangenden Lichtimpuls (10) in Abhängigkeit von dem Remissionssignal einzustellen.

3. Laserscanner nach einem der vorhergehenden Ansprüche, **dadurch gekennzeichnet, dass** die Lichtempfangsanordnung (17) ausgebildet ist, die Verstärkung einer Avalanche Photodiode (21) für den zu empfangenden Lichtimpuls (10) in Abhängigkeit von dem Remissionssignal einzustellen.

4. Laserscanner nach einem der vorhergehenden Ansprüche, **dadurch gekennzeichnet, dass** die reduzierte Leistung des Lichtmesssignals (9) wesentlich kleiner, insbesondere ca. 1 % der Leistung des Lichtimpulses (10) ist.

5. Laserscanner nach Anspruch 1, **dadurch gekennzeichnet, dass** die Lichtquelle durch den Impulslaser (13) gebildet ist.

6. Laserscanner nach Anspruch 1, **dadurch gekennzeichnet, dass** eine Ansteuereinheit (22) für den Impulslaser (13) ausgebildet ist, die Ausgangsleistung des Lichtimpulses (10) in Abhängigkeit von dem Remissionssignal einzustellen.

7. Laserscanner nach einem der Ansprüche 1 bis 4, **dadurch gekennzeichnet, dass** das Lichtmesssignal (9) ein kontinuierliches Gleichlichtsignal ist, welches dem Lichtimpuls (10) überlagert ist.

8. Laserscanner nach einem der vorhergehenden Ansprüche, **dadurch gekennzeichnet, dass** die Lichtempfangsanordnung (17) Mittel aufweist zur Trennung des empfangenen Lichtmesssignals (9) und des empfangenen Lichtimpulse (10).

9. Laserscanner nach Anspruch 8, **dadurch gekennzeichnet, dass** das Mittel zur Trennung eine Frequenzweiche ist.

10. Laserscanner nach Anspruch 7, **dadurch gekennzeichnet, dass** das Gleichlichtsignal moduliert ist.

11. Laserscanner nach einem der Ansprüche 1 bis 4, **dadurch gekennzeichnet, dass** das Lichtmesssignal (9) ein Lichtimpulsmesssignal ist.

12. Laserscanner nach Anspruch 11, **dadurch gekennzeichnet, dass** auf das Lichtimpulsmesssignal der Lichtimpuls (10) folgt und einen zeitlichen Abstand kleiner 1 µs aufweist.

13. Laserscanner nach einem der vorhergehenden Ansprüche 11 bis 12, **dadurch gekennzeichnet, dass** mit dem Lichtimpulsmesssignal ein für den Abstand des Objektes zum Laserscanner (1) repräsentatives Abstandssignal ermittelt wird.

14. Laserscanner nach einem der vorhergehenden Ansprüche, **dadurch gekennzeichnet, dass** mehrere aufeinanderfolgende Lichtmesssignale (9) aus einer einzigen umlaufenden Abtastbewegung der Lichtablenkeinheit (5) durch die Lichtempfangsanordnung (17) auswertbar sind.

15. Laserscanner nach einem der vorhergehenden Ansprüche, **dadurch gekennzeichnet, dass** mehrere Lichtmesssignale (9) aus unterschiedlichen umlaufenden Abtastbewegungen der Lichtablenkeinheit (5), die jedoch mit gleicher Richtung zueinander aus dem Messbereich empfangen werden, durch die Lichtempfangsanordnung (17) auswertbar sind.

16. Laserscanner nach einem der vorhergehenden Ansprüche, **dadurch gekennzeichnet, dass** als Ansteuereinheit (22) eine Ansteuerschaltung zum Ansteuern des Impulslasers (13) oder der Lichtquelle mit zwei Avalanche-Transistoren (T1, T2) vorgesehen ist, wobei ein erster Transistor (T1) für eine Erzeugung des Lichtimpulses (10) und ein zweiter Transistor (T2) für eine Erzeugung des Lichtmesssignals (9) vorgesehen ist.

17. Laserscanner nach Anspruch 16 **dadurch gekennzeichnet, dass** der erste und zweite Transistor (T1, T2) im Ausgangskreis am jeweiligen Kollektor, jeweils getrennte Hochspannungen (HV1, HV2) als Versorgungsspannungen aufweisen und beide Transistoren (T1, T2) im Ausgangskreis einen Widerstand (R1, R2) und einen Ladekondensator (C1, C2) aufweisen, zur Erzeugung einer jeweiligen Ausgangsleistung für den Impulslaser (13).

18. Laserscanner nach Anspruch 17 **dadurch gekennzeichnet, dass** an dem Kollektoranschluss des zweiten Transistors (T2) ein Widerstand (R3) und eine Induktivität (L2) in Reihe angeordnet sind zur Anpassung einer Zeitkonstanten und/oder einer Dämpfung eines LC-Schwingkreises mit der Induktivität (L2) und dem Ladekondensator (C2).

## Claims

1. A laser scanner based on the time-of flight principle having a pulsed laser (13) which transmits light pulses (10) after one another into a measured zone and having
- a light reception arrangement (17) which receives the light pulses reflected at an object (12) in the measured zone and supplies them to an evaluation unit (16) in the form of electric reception signals;
- said evaluation unit determining a distannce signal representative of the distance of the object from the laser scanner (1) from the time between the transmission and the reception of the light pulse (10) while taking account of the speed of light;
- and having a light deflection unit (5) which is arranged between the pulsed laser (13) and the measured zone and which deflects the light pulses (10) into the measured zone in continuously changing directions,
wherein
- a light source is present which transmits a light measurement signal (9) of reduced power which is likewise deflected by the light deflection unit (5) into the measured zone in a continuously changing direction;
- the light reception arrangement (17) is made to receive the light measurement signal (9) reflected at the object in the measured zone and to determine a remission signal representative of the remission of the light measurement signal (9) at the object; and
- the light pulse (10) or the reception signals are changeable in dependence on the remission signal,
**characterised in that**
the light reception arrangement (17) is made as a regulator, with the light measurement signals (9) forming an actual value and being compared with a preset desired value and with the light pulse (10) or the reception signals being changeable as a modulated variable.

2. A laser scanner in accordance with claim 1, **characterised in that** an electronic signal processing stage (20) is present which is arranged downstream of the light reception arrangement (17) to set a detection sensitivity of the light reception arrangement (17) for the light pulse (10) to be received in dependence on the remission signal.

3. A laser scanner in accordance with any one of the preceding claims, **characterised in that** the light reception arrangement (17) is made to set the amplification of an avalanche photodiode (21) for the light pulse (10) to be received in dependence on the remission signal.

4. A laser scanner in accordance with any one of the preceding claims, **characterised in that** the reduced power of the light measurement signal (9) is substantially smaller than, in particular approximately 1%, of, the power of the light pulse (10).

5. A laser scanner in accordance with claim 1, **characterised in that** the light source is formed by the pulsed laser (13).

6. A laser scanner in accordance with claim 1, **characterised in that** a control unit (22) for the pulsed laser (13) is made to set the output power of the light pulse (10) in dependence on the remission signal.

7. A laser scanner in accordance with any one of the claims 1 to 4, **characterised in that** the light measurement signal (9) is a continuous constant light signal which is superimposed on the light pulse (10).

8. A laser scanner in accordance with any one of the preceding claims, **characterised in that** the light reception arrangement (17) has means for the splitting of the received light measurement signal (9) and of the received light pulse (10).

9. A laser scanner in accordance with claim 8, **characterised in that** the means for the splitting is a diplexer.

10. A laser scanner in accordance with claim 7, **characterised in that** the constant light signal is modulated.

11. A laser scanner in accordance with any one of the claims 1 to 4, **characterised in that** the light measurement signal (9) is a light pulse measurement signal.

12. A laser scanner in accordance with claim 11, **characterised in that** the light pulse (10) follows the light pulse measurement signal and has a time interval of less than 1 µs.

13. A laser scanner in accordance with one of the preceding claims 11 to 12, **characterised in that** a distance signal representative of the distance of the object from the laser scanner (1) is determined with the light pulse measurement signal.

14. A laser scanner in accordance with any one of the preceding claims, **characterised in that** a plurality of sequential light measurement signals (9) from a single rotating sampling movement of the light deflection unit (5) can be evaluated by the light reception arrangement (17).

15. A laser scanner in accordance with any one of the preceding claims, **characterised in that** a plurality of light measurement signals (9) from different rotating sampling movements of the light deflection unit (5), which are, however, received from the measured zone with the same direction with respect to one another, can be evaluated by the light reception arrangement.

16. A laser scanner in accordance with any one of the preceding claims, **characterised in that** a control circuit is provided as the control unit (22) for the control of the pulsed laser (13) or of the light source having two avalanche transistors (T1, T2), with a first transistor (T1) being provided for a generation of the light pulse (10) and a second transistor (T2) being provided for a generation of the light measurement signal (9).

17. A laser scanner in accordance with claim 16, **characterised in that** the first and second transistors (T1, T2) have respective separate high voltages (HV1, HV2) as supply voltages in the output circuit at the respective collector and both transistors (T1, T2) have a resistor (R1, R2) and a reservoir capacitor (C1, C2) in the output circuit for the generation of a respective output power for the pulsed laser (13).

18. A laser scanner in accordance with claim 17, **characterised in that** a resistor (R3) and an inductor (L2) are arranged in series at the collector terminal of the second transistor (T2) for the adaptation of a time constant and/or for an attenuation of a LC resonant circuit with the inductor (L2) and the reservoir capacitor (C2).

## Revendications

1. Scanneur à laser selon le principe du temps de parcours de la lumière comprenant un laser à impulsions (13) qui émet des impulsions de lumière successives (10) dans une zone de mesure, et comprenant
- un agencement récepteur de lumière (17) qui reçoit les impulsions de lumière (10) renvoyées sur un objet (12) dans la zone de mesure et les transmet sous forme de signaux électriques reçus à une unité d'évaluation (16),
- laquelle détermine, au moyen de la vitesse de la lumière, à partir du temps entre l'émission et la réception de l'impulsion de lumière (10), un signal de distance représentatif pour la distance de l'objet au scanneur à laser (1)
- ainsi qu'une unité de déflexion de lumière (5), agencée entre le laser à impulsion (13) et la zone de mesure, laquelle défléchit les impulsions de lumière (10) vers la zone de mesure dans des directions qui varient continuellement,
dans lequel
- il est prévu une source de lumière qui envoie un signal de mesure de lumière (9) à puissance réduite qui est également défléchi par l'unité de déflexion de lumière (5) vers la zone de mesure dans une direction qui varie continuellement,
- l'agencement récepteur de lumière (17) est réalisé pour recevoir le signal de mesure de lumière (9) renvoyé sur l'objet dans la zone de mesure et pour déterminer un signal de rémission représentatif pour la rémission du signal de mesure de lumière (9) sur l'objet, et
- l'impulsion de lumière (10) ou les signaux reçus sont modifiables en fonction du signal de rémission,
**caractérisé en ce que**
- l'agencement récepteur de lumière (17) est réalisé sous forme de régulateur, tel que les signaux de mesure de lumière (9) forment une valeur réelle, lesquels sont comparés à une valeur de consigne prédéterminée, et à titre de grandeur de réglage, l'impulsion de lumière (10) ou les signaux reçus sont variables.

2. Scanneur à laser selon la revendication 1, **caractérisé en ce qu'**il est prévu un étage électronique de traitement de signaux (20), agencé à la suite de l'agencement récepteur de lumière (17) afin de régler une sensibilité de détection de l'agencement récepteur de lumière (17) pour l'impulsion de lumière (10) à recevoir, en fonction du signal de rémission.

3. Scanneur à laser selon l'une des revendications précédentes, **caractérisé en ce que** l'agencement récepteur de lumière (17) est agencé pour régler l'amplification d'une photodiode à avalanche (21) pour l'impulsion de lumière (10) à recevoir en fonction du signal de rémission.

4. Scanneur à laser selon l'une des revendications précédentes, **caractérisé en ce que** la puissance réduite du signal de mesure de lumière (9) est sensiblement inférieure, et en particulier environ 1 % de la puissance de l'impulsion de lumière (10).

5. Scanneur à laser selon la revendication 1, **caractérisé en ce que** la source de lumière est formée par le laser à impulsions (13).

6. Scanneur à laser selon la revendication 1, **caractérisé en ce qu'**une unité de pilotage (22) pour le laser à impulsion (13) est réalisée pour régler la puissance de sortie de l'impulsion de lumière (10) en fonction du signal de rémission.

7. Scanneur à laser selon l'une des revendications 1 à 4, **caractérisé en ce que** le signal de mesure de lumière (9) est un signal continuel de lumière continue, qui est superposé à l'impulsion de lumière (10).

8. Scanneur à laser selon l'une des revendications précédentes, **caractérisé en ce que** l'agencement récepteur de lumière (17) comprend des moyens pour séparer le signal de mesure de lumière reçu (9) et l'impulsion de lumière reçue (10).

9. Scanneur à laser selon la revendication 8, **caractérisé en ce que** les moyens de séparation sont formés par un filtre à fréquences.

10. Scanneur à laser selon la revendication 7, **caractérisé en ce que** le signal de lumière continue est modulé.

11. Scanneur à laser selon l'une des revendications 1 à 4, **caractérisé en ce que** le signal de mesure de lumière (9) est un signal de mesure d'impulsions de lumière.

12. Scanneur à laser selon la revendication 11, **caractérisé en ce que** l'impulsion de lumière (10) suit le signal de mesure d'impulsions de lumière et présente un écart temporel inférieur à 1 µs.

13. Scanneur à laser selon l'une des revendications 11 à 12, **caractérisé en ce qu'**avec le signal de mesure d'impulsions de lumière un signal de distance représentatif de la distance de l'objet au scanneur à laser (1) est déterminé.

14. Scanneur à laser selon l'une des revendications précédentes, **caractérisé en ce que** plusieurs signaux de mesure de lumière successifs (9) sont susceptibles d'être évalués par l'agencement récepteur de lumière (17) à partir d'un unique mouvement de balayage périphérique de l'unité de déflexion de lumière (5).

15. Scanneur à laser selon l'une des revendications précédentes, **caractérisé en ce que** plusieurs signaux de mesure de lumière (9) provenant de différents mouvements de balayage périphérique de l'unité de déflexion de lumière (5), qui sont cependant reçus depuis la zone de mesure avec la même direction les uns par rapport aux autres, sont susceptibles d'être évalués par l'agencement récepteur de lumière (17).

16. Scanneur à laser selon l'une des revendications précédentes, **caractérisé en ce qu'**il est prévu à titre d'unité de pilotage (22) un circuit de pilotage pour piloter le laser à impulsion (13) ou la source de lumière avec deux transistors à avalanche (T1, T2), tels qu'un premier transistor (T1) est prévu pour engendrer l'impulsion de lumière (10) et un second transistor (T2) est prévu pour engendrer le signal de mesure de lumière (9).

17. Scanneur à laser selon la revendication 16, **caractérisé en ce que** le premier et le second transistor (T1, T2) présentent dans le circuit de sortie au niveau du collecteur respectif des hautes tensions respectives séparées (HV1, HV2) à titre de tensions d'alimentation, et les deux transistors (T1, T2) comportent dans le circuit de sortie une résistance (R1, R2) et un condensateur de charge (C1, C2), pour engendrer une puissance de sortie respective pour le laser à impulsions (13).

18. Scanneur à laser selon la revendication 17, **caractérisé en ce que**, pour ajuster une constante temporelle et/ou pour amortir un circuit oscillant L C avec l'inductance (L2) et le condensateur de charge (C2), une résistance (R3) et une inductance (L2) sont branchées en série à la borne de collecteur du second transistor (T2)
